# EUROPEAN PATENT SPECIFICATION

(11) **EP 4 453 907 B1**
(45) Date of publication and mention of the grant of the patent: **15.04.2026**
(21) Application number: 24713824.1
(22) Date of filing: 16.02.2024
(51) Int. Cl.: G06V 20/59, G06V 10/82, G06V 40/16, G06V 10/62, G06V 10/80, G06V 40/18

(54) **VIDEO-BASED DROWSY DRIVING DETECTION ON AN EDGE DEVICE**
VIDEOBASIERTE ERKENNUNG VON SCHLÄFRIGKEIT AM STEUER AUF EINEM ENDGERÄT
DÉTECTION VIDÉO DE LA CONDUITE EN ÉTAT DE SOMNOLENCE SUR UN DISPOSITIF PÉRIPHÉRIQUE

(30) Priority: 17.02.2023 US 202363446368 P
(43) Date of publication of application: 30.10.2024
(73) Proprietor: NETRADYNE, INC., San Diego, CA 92122 (US)
(72) Inventor: THORNTON, Matthew, San Diego, California 92122 (US); ZALAWADIA, Ridham, San Diego, California 92122 (US); LAIELLI, Michael Jason, San Diego, California 92122 (US); HIPPALGAONKAR, Hrishikesh Pradeep, San Diego, California 92122 (US); MA, Xinnan, San Diego, California 92122 (US); AVANIGADDA, Prasanna Kumar, San Diego, California 92122 (US); YEDLA, Arvind, San Diego, California 92122 (US); ANNAPUREDDY, Venkata Sreekanta Reddy, San Diego, California 92122 (US); CHANDRAN, Nishanth, San Diego, California 92122 (US); VERMA, Pratik, San Diego, California 92122 (US); UDAYAKUMAR, Rathnakumar, San Diego, California 92122 (US); NAG, Anirban, San Diego, California 92122 (US); JOSE, Jijo, San Diego, California 92122 (US); KAHN, Adam David, San Diego, California 92122 (US)
(74) Representative: Simmons & Simmons
(86) International application number: PCT/US2024/016187
(87) International publication number: WO 2024/173817

(56) References cited:
- CN-A- 108 791 299
- RAMYA SRI B ET AL: "Early Driver Drowsiness Detection using Convolution Neural Networks", 2021 SECOND INTERNATIONAL CONFERENCE ON ELECTRONICS AND SUSTAINABLE COMMUNICATION SYSTEMS (ICESC), IEEE, 4 August 2021 (2021-08-04), pages 1779 - 1784, XP033976931, DOI: 10.1109/ICESC51422.2021.9532927
- KOTSERUBA IULIIA ET AL: "Attention for Vision-Based Assistive and Automated Driving: A Review of Algorithms and Datasets", IEEE TRANSACTIONS ON INTELLIGENT TRANSPORTATION SYSTEMS, IEEE, PISCATAWAY, NJ, USA, vol. 23, no. 11, 1 November 2022 (2022-11-01), pages 19907 - 19928, XP011926241, ISSN: 1524-9050, [retrieved on 20220712], DOI: 10.1109/TITS.2022.3186613
- ZHANG ZHIMIN ET AL: "A Systematic Survey of Driving Fatigue Monitoring", IEEE TRANSACTIONS ON INTELLIGENT TRANSPORTATION SYSTEMS, IEEE, PISCATAWAY, NJ, USA, vol. 23, no. 11, 1 November 2022 (2022-11-01), pages 19999 - 20020, XP011926247, ISSN: 1524-9050, [retrieved on 20220722], DOI: 10.1109/TITS.2022.3189346

## Description

### CROSS REFERENCE

This present application claims the benefit of and priority to U.S. Provisional Patent Application No. 63/446,368, filed on February 17, 2023, and entitled VIDEO-BASED DROWSY DRIVING DETECTION ON AN EDGE DEVICE.

### TECHNICAL FIELD

Certain aspects of the present disclosure generally relate to Intelligent Driving Monitoring Systems (IDMS), driver monitoring systems, Advanced Driver Assistance Systems (ADAS), and autonomous driving systems, and more particularly to systems and methods for drowsy driving detection of a driver.

### BACKGROUND

Internet-of-things (IoT) applications may include embedded machine vision for intelligent driver or driving monitoring systems (IDMS), advanced driving assistance systems (ADAS), autonomous driving systems, camera-based surveillance systems, smart cities, and the like. A user of IoT systems in a driving context may require the IoT systems to accurately determine driving behavior of a driver.

IoT systems are installed in vehicles to increase safety and ensure positive driving behavior. Most of the accidents are caused by various reasons such as speeding, drowsy driving, etc. The driver of the vehicle can be drowsy because of lack of sleep. In such cases, the driver has to stop driving the vehicle and take a rest. However, the driver may not know that he is falling asleep while driving and will continue to do so, leading to dangerous accidents.

Further background information can be found in RAMYA SRI B ET AL: "Early Driver Drowsiness Detection using Convolution Neural Networks", 2021 SECOND INTERNATIONAL CONFERENCE ON ELECTRONICS AND SUSTAINABLE COMMUNICATION SYSTEMS (ICESC), IEEE, 4 August 2021 (2021-08-04), pages 1779-1784, and in CN 108 791 299 A (ZHEJIANG LEAPMOTOR TECH CO LTD) 13 November 2018 (2018-11-13).

Therefore, there is a need for a system to detect drowsy driving and alert the driver based on the detection to reduce drowsy driving, leading to safe driving session by a driver.

### SUMMARY

The invention is set out in the appended set of claims.

Certain aspects of the present disclosure generally relate to a computer-implemented method for drowsy driving detection. The method comprising: receiving, by at least one processor of a device in a vehicle, a first image at a first resolution from a camera in the vehicle; processing, by the at least one processor, the first image to output a first facial image based on a predetermined position of a head of a driver of the vehicle in a field of view of the camera; storing, by the at least one processor, the first facial image in a first buffer of a memory of the device; selecting, by the at least one processor, a group of facial images from the memory, the group of facial images comprising the first facial image, the group of facial images constitute a video of sequential facial images; determining, by the at least one processor, a drowsy confidence score based on the video; and generating, by the at least one processor, an alert if the drowsy confidence score is greater than a first threshold.

Certain aspects of the present disclosure generally relate to a vehicular safety system that includes the computer-implemented method for drowsy driving detection described above.

### BRIEF DESCRIPTION OF DRAWINGS

FIG. 1 illustrates an environment for drowsy driving detection according to various embodiments of the present disclosure.
FIG. 2 illustrates a block diagram of an edge device for drowsy driving detection.
FIG. 3 illustrates a first arrangement of modules for drowsy driving detection.
FIG. 4 illustrates various steps involved in drowsy driving detection with an example.
FIG. 5 illustrates video-based edge inference in drowsy driving detection.
FIG. 6 illustrates a first configuration of single-frame edge inference and the video-based edge inference in drowsy driving detection.
FIG.7 illustrates a second arrangement of modules for drowsy driving detection.
FIG. 8 illustrates a second configuration of single-frame edge inference and the video-based edge inference in drowsy driving detection.
FIG. 9 illustrates a third arrangement of modules for drowsy driving detection.
FIG. 10 illustrates a fourth arrangement of modules for drowsy driving detection.
FIG. 11 illustrates a fifth arrangement of modules for drowsy driving detection.
FIG. 12 illustrates a third configuration of single-frame edge inference and the video-based edge inference in drowsy driving detection.
FIG. 13 illustrates training of the video-based neural network model for drowsy driving detection.

### DETAILED DESCRIPTION

The detailed description set forth below, in connection with the appended drawings, is intended as a description of various configurations and is not intended to represent the only configurations in which the concepts described herein may be practiced. The detailed description includes specific details for the purpose of providing a thorough understanding of the various concepts. However, it will be apparent to those skilled in the art that these concepts may be practiced without these specific details. In some instances, well-known structures and components are shown in block diagram form to avoid obscuring such concepts.

Based on the teachings, one skilled in the art should appreciate that the scope of the disclosure is intended to cover any aspect of the disclosure, whether implemented independently of or combined with any other aspect of the disclosure, provided that these implementations fall within the scope of the appended set of claims. For example, an apparatus may be implemented, or a method may be practiced using any number of the aspects set forth. In addition, the scope of the disclosure is intended to cover such an apparatus or method practiced using other structure, functionality, or structure and functionality in addition to or other than the various aspects of the disclosure set forth, provided that this apparatus or method falls within the scope of the appended set of claims.

The word "exemplary" is used herein to mean "serving as an example, instance, or illustration." Any aspect described herein as "exemplary" is not necessarily to be construed as preferred or advantageous over other aspects.

Although particular aspects are described herein, many variations and permutations of these aspects fall within the scope of the disclosure, provided that they fall within the scope of the appended set of claims. Although some benefits and advantages of the preferred aspects are mentioned, the scope of the disclosure is not intended to be limited to particular benefits, uses or objectives. Rather, aspects of the disclosure are intended to be broadly applicable to different technologies, and system configurations, some of which are illustrated by way of example in the figures and in the following description of the preferred aspects. The detailed description and drawings are merely illustrative of the disclosure rather than limiting, the scope of the disclosure being defined by the appended claims thereof.

### Drowsy driving detection

In order to detect drowsy driving, driving behavior may be monitored. Driver monitoring may be performed in real time or substantially real time as a driver operates a vehicle or may be done at a later time based on recorded data. Driver monitoring at a later time may be useful, for example, when investigating the cause of an accident, or to provide coaching to a driver. Driver monitoring in real time may be useful to guard against unsafe driving, for example, by ensuring that a car cannot exceed a certain pre-determined speed.

Aspects of the present disclosure are directed to methods of monitoring drowsy behavior of a driver while driving a vehicle, which may include methods of determining and/or providing alerts to an operator of a vehicle and/or transmitting remote alerts to a remote driver monitoring system. Remote alerts may be transmitted wirelessly over a wireless network to one or more servers and/or one or more other electronic devices, such as a mobile phone, tablet, laptop, desktop, etc., such that information about a driver and objects and environments that a driver and vehicle encounters may be documented and reported to other individuals (e.g., a fleet manager, insurance company, etc.). An accurate detection of drowsy driving behavior helps in avoiding accidents and ensure safe driving sessions. In addition to drowsy driving detection, the driver behavior is monitored for various applications. Insurance companies may use accurately characterized driver behavior to influence premiums. Insurance companies may, for example, reward risk-mitigating behavior and dis-incentivize behavior associated with increased accident risk. Fleet owners may use accurately characterized driver behavior to incentivize their drivers. Likewise, taxicab aggregators may incentivize taxicab driver behavior.

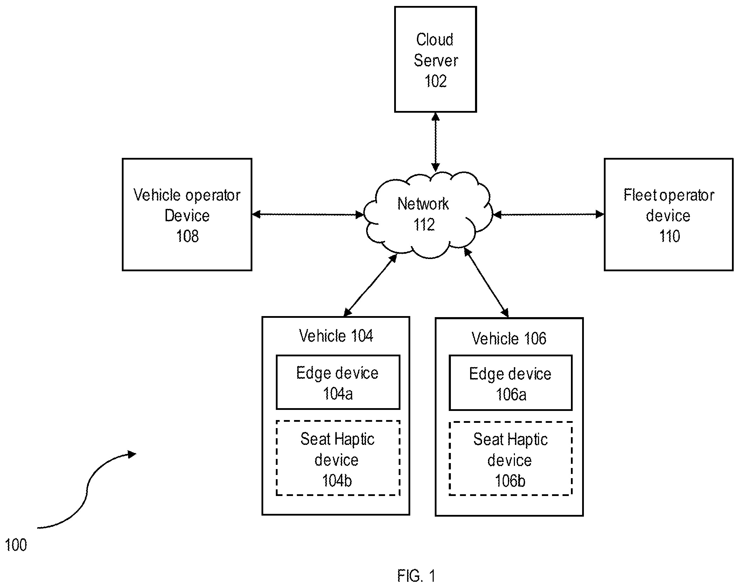

FIG. 1 depicts an illustration of an environment 100 in which one or more embodiments of the invention may be implemented. The environment 100 includes a cloud server 102, vehicles 104, 106, a vehicle operator device 108 a fleet operator device 110, and a network 112 for communication between the cloud server and edge devices 104a, 106a installed in the vehicles 104, 106. A network between devices within a vehicle, such as an edge device and a seat haptic device may be a wired network.

The network 112 can be radio access networks such as GSM, LTE, 5G or the like. In one embodiment, the network can be Wi-Fi or other wireless broadband networks.

The cloud server 102 provides configuration settings and software related services to the edge devices. The cloud server may store the data received from the edge devices. Further, the cloud server may provide alerts to the fleet operator device and driver's device upon detection of drowsy driving by an edge device.

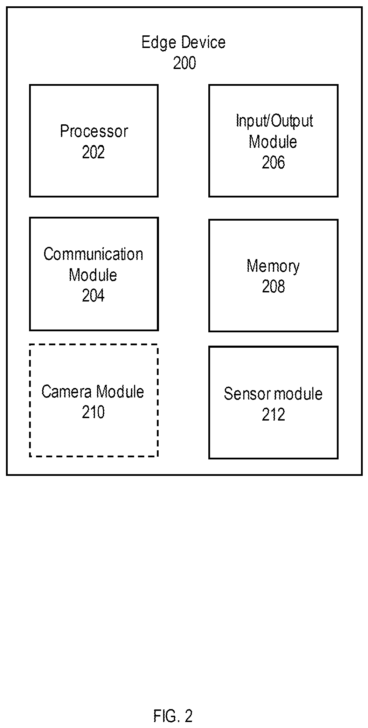

In one embodiment, each edge device 104a, 106a may be an advanced driver assistance system (ADAS) that includes one or more cameras and sensors. Further, each edge device 104a, 106a may include a processor and communication circuitry that includes radio interfaces and antennas. The radio interfaces may correspond to a plurality of radio access technologies including one or more of GSM, NB-IoT, LTE, 5G, WLAN, Bluetooth, BT-LE, NFC, radio frequency identifier (RFID), ultra-wideband (UWB), and the like. Each edge device 104a, 106a is installed in a vehicle 104, 106, respectively, to monitor driver behavior, which includes capturing a cabin of the vehicle with a driver-facing camera and may include capturing a driving path of the vehicle with other sensors and/or a forward-facing camera. Further, each edge device 104a, 106a may include a microphone, an audio speaker or other output devices to provide notifications and alerts to the driver. Each edge device 104a, 106a may be a standalone device or a combination of devices. In one embodiment, the edge device installed in the vehicle may include a sensor device and a computing device, where the sensor device may include cameras and other inertial sensors, but not a processor. The computing device on the other hand may include one or more processors to process the information captured by the sensor device. The sensor device may relay the captured data to the computing device via a wired or wireless connection. The distribution of functionalities among devices may be implemented to reduce the size of devices that are installed near the windshield. Vehicles 104, 106 may include haptic devices 104b, 106b, respectively, installed in seats of the vehicles to provide haptic feedback to the driver through vibrations when instructed. The various components of an exemplary edge device are explained next with reference to FIG. 2.

The fleet operator device 110 is a computing device that has software installed to monitor and manage the edge devices installed in vehicles of a fleet. The fleet operator device 110 can be a laptop, mobile phone, desktop, and the like. In some embodiments, the software may be a web browser.

FIG. 2 depicts a block diagram of the edge device 200 (similar to edge devices 104a, 106a) including various components. The edge device 200 includes a processor 202, a communication module 204, input/output (I/O) module 206, memory 208, a camera module 210 and a sensor module 212. In one embodiment, the edge device 200 may not include a camera module 210 and in those scenarios, the camera module 210 may be connected to edge device 200 through wired or wireless connection. The edge device 200 may include input sensors (which may include a forward-facing camera, a driver facing camera, connections to other cameras that are not physically mounted to the device, inertial sensors, car OBD-II port sensor data (which may be obtained through a Bluetooth connection), and the like) and compute capability. The compute capability may be a CPU or an integrated System-on-a-chip (SOC), which may include a CPU and other specialized compute cores, such as a graphics processor (GPU), gesture recognition processor, and the like. In some embodiments, the edge device 200 for determining, transmitting, and/or providing alerts to an operator of a vehicle and/or a device of a remote driver monitoring system may include wireless communication to cloud services, such as with Long Term Evolution (LTE) or Bluetooth communication to other devices nearby. For example, the cloud server 102 may provide real-time analytics assistance. In an embodiment involving cloud services, the cloud server 102 may facilitate aggregation and processing of data for offline analytics. The edge device 200 may also include a global positioning system (GPS) either as a separate module or integrated within a system-on-a-chip (e.g., included in sensor module 212).

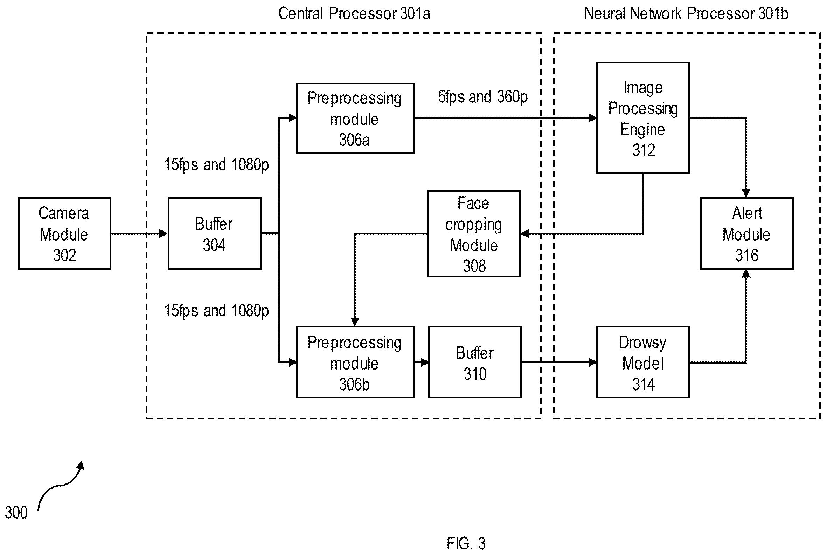

FIG. 3 illustrates a first arrangement 300 of various modules in the edge device 200 for implementing drowsy driving detection. In one embodiment, the processor 202 of the edge device 200 includes a central processor 301a, a dedicated neural network processor 301b. In an alternative embodiment, the one or more cameras and the one or more sensors may be a part of a sensor device (not shown in FIG. 3) that is external to the edge device 200 and the sensor device communicates with the edge device 200 via wired or wireless communication means.

### Camera module

The camera module 302 includes one or more cameras to capture visual data. The camera module 302 may be included in the edge device 200 or may be included in the sensor device external to edge device 200. In one embodiment, the sensor device may be installed near the windshield of a vehicle, such as one of vehicles 104 or 106, and the edge device 200 may be installed at an unused place in the cabin of the vehicle such as under the driver's seat or passenger's seat. The arrangement may reduce the size of the sensor device placed at the windshield while still enabling real-time or substantially real-time drowsy driving detection.

The camera module 302 is placed to monitor the driving behavior of the driver. In order to accurately capture the driving behavior, the camera module 302 may include an inward facing camera to capture visual data of the cabin of the vehicle and an outward facing camera to capture visual data of the path ahead of the vehicle. In one embodiment, the camera module 302 can have more than two cameras. The camera module 302 may have a dedicated camera to capture the face of the driver of the vehicle.

The visual data captured by the camera module 302 is transferred to one or more processors of the edge device 200. The one or more processors may include a general purpose CPU 301a and/or a specialized neural network processor (NNP) 301b. The term NNP may refer to hardware substrates, such as a graphics processing unit (GPU) or a digital signal processor (DSP), each of which may support other functions, but which may operate as a neural network processing accelerator. The transfer of visual data from the camera module 302 to the CPU 301a can be through an internal bus if the camera module 302 is included in the edge device 200. Alternatively, the transfer of the visual data can be through a wired or a wireless communication means if the camera module 302 is external to the edge device 200. The visual data captured by the camera may be of predefined format. For example, the predefined format can be RAW format. The visual data may be a sequence of image frames captured at a predefined frame rate. The sequence of image frames may correspond to a video. The video may have a spatial resolution that enables accurate inferences of facial characteristics and states, such as whether the driver's eyes are partially closed. The camera may capture the visual data at higher resolutions such as 1080p, 2160p, etc.

In addition to the spatial resolution, the visual data captured by the camera may be a video having a frame rate that enables enough temporal resolution to accurately capture blinking of an eye. In one embodiment, the frame rate of the video should be greater than a predefined threshold to capture blinks of an eye of the driver. In one example, the predefined threshold for the frame rate is 15 frames per second (fps), however, the frame rate of the video may be greater than or equal to 15 fps. In some embodiments, the temporal resolution of the camera may be lower that may be required to accurately detect blinking behavior, but drowsy driving may still be detected using video-based inferences, in accordance with certain aspects of the present disclosure.

The video is transferred to the edge device 200 having the one or more processors (e.g. CPU and/or NNP) through an internal bus when camera module 302 is included in the edge device 200. In one embodiment, the video may be written to a portion (such as a buffer 304) of a memory 208 of the edge device 200 that can be accessed by the processors (such as NNP 301b and CPU 301a). The buffer 304 can be a circular buffer. The video stored in the buffer 304 can be accessed by various modules in the processors and therefore, the buffer 304 may be referred as 'shared buffer 304' hereinafter. In one embodiment, the video stored in the shared buffer 304 is accessed by preprocessing modules 306a, 306b in the central processor 301a.

In one embodiment, there can be a single processor for preprocessing the captured visual data and for executing a machine learning model or a neural network model instead of a neural network processor or a GPU.

### First preprocessing module - Driver Context Processing Stream

In one embodiment, the edge device 200 may be configured to include a driver context processing stream to generate inferences based on single image frames. The driver context processing stream may feature processing of all of a portion of a camera frame, such that the portion of the images that are processed includes the driver's arms and hands. This context stream may be wider than a driver drowsiness processing stream which will be described later in the present disclosure. In the driver context processing stream, a first preprocessing module 306a may be executed, in part, on a general purpose CPU, in part on an NNP, some combination, or on one processor exclusively. In the example illustrated in FIG. 3, the preprocessing module 306a processes the video prior to sending the captured video to an image processing engine (IPE) 312. The IPE 312 may comprise a neural network and may be executed on a neural network accelerator, such as an NNP 301b. The first preprocessing module 306a ensures that the video sent to the IPE 312 is in desired format for processing. To ensure that the video is in the desired format, the first preprocessing module 306a performs multiple operations (such as scaling, sampling, etc.) on the video. In some embodiments, some or all of these operations may be processed on the IPE 312. The desired format can be set by the service provider and typically corresponds to the format of video that was used to train machine learning models, such as neural networks, of the IPE 312.

In embodiments for which the driver context processing stream and the driver drowsiness processing stream are each based on a single video source, video from the single video source may be stored in a shared buffer 304. The video is initially stored at a spatial and temporal resolution that is dictated by the most demanding downstream processing streams. In some embodiments, the driver context processing stream may capture a wider field of view, and as such, the IPE 312 may be configured to process the wider field of view at a lower resolution (so that the pixel dimensions remain within the processing capacity of the NNP 301b). Accordingly, the video data in the shared buffer 304 will be at a higher resolution and/or higher frame rate than the IPE 312 may be configured to process. In this scenario, the first preprocessing module 306a down samples the high-definition raw video to a lower resolution video and/or to a lower frame rate. In one embodiment, video data may be captured by the camera and initially stored in the shared buffer 304 at an image resolution of 1080p and a frame rate of 15 fps, but the processed video (resulting from the first preprocessing module 306a) may have an image resolution of 360p and frame rate of 5 fps. In this way, the output video from the first preprocessing module 306a may have lesser frames with lower resolution than the original video captured by the camera. Further, the format of the video from the first preprocessing module 306a may be different from the format of the captured video.

### Image Processing Engine (IPE)

The image processing engine (IPE) 312 of the driver context processing stream is a processing module that may be executed on one or more processors, such as the NNP 301b. The IPE 312 may include multiple machine learning (ML) models and/or a multi-headed neural network. Each model or each head of the multi-headed neural network may be used for determining various driving behaviors of a driver of the vehicle. The multiple ML models may include a phone usage ML model, a pose ML model, an eye closure ML model, a yawn/mouth open ML model. Some or all of these models may instead be implemented as a head of a multi-headed neural network, so that processing of initial processing layers (i.e., the trunk) may be shared across the models. Each of these models, implemented as an independent neural network or a head of a multi-headed model will be referred to as an ML model of the IPE 312. In certain embodiments, these ML models are frame/image-based models and take a frame of a video as an input.

The ML models are configured to process video frames from the first preprocessing module 306a. The ML models are trained to output scores for an individual image. The multiple ML models may output respective scores corresponding to phone usage, pose, eye closure score, and yawn score. For example, the phone usage ML model may output a phone usage score that indicates whether the driver is using phone in the captured frame. The pose ML model may output a head pose score indicating a direction of driver's head. For example, the pose ML model may output a head pose score '0' that indicates the driver's head is turned left or right. The eye closure ML model may output an eye closure score that indicates a level of closure of driver's eyes in the processed frame. The yawn ML model may output a mouth open/yawn score that indicates a level of opening of driver's mouth in the processed frame. These scores are sent to the alert module 316 at which the ML model scores are combined with the drowsy confidence score to distinguish drowsy driving from other driving behaviors, such as distracted driving by a driver. The alert module 316 may generate alerts, according to the detection.

In one example, the video received at the IPE 312 is of resolution 480 x 360 with a frame rate of 5 fps. In this case, each ML model in the IPE 312 will output five scores for one second of video, where each score is determined for a respective frame in the video. In one embodiment, scores of all the frames can be sent to the alert module 316. In another embodiment, the scores can be averaged for a video and only one score per second from each ML model can be sent to the alert module 316.

### Second preprocessing module - Driver Drowsiness Processing Stream

According to certain aspects, a second processing path may result in video-based inferences of drowsy driving. This processing stream may be referred to as a driver drowsiness processing stream. For certain embodiments of the present disclosure, such as embodiments that comprise multiple processing streams starting from the same image source, the second preprocessing module 306b accesses the shared buffer 304 to retrieve the captured video. The second preprocessing module 306b may include multiple sub-modules to transform the video to a desired resolution and frame rate for the drowsy driving neural network model 314 (i.e., drowsy model). The desired resolution and frame rate of the video for the drowsy driving neural network model 314 may be different from the resolution and/or the frame rate of the video required for the IPE 312. For example, the driver drowsiness processing stream may focus on relatively closer crops of the driver's face so that relatively higher resolution imagery may be processed by the NNP 301b. In one embodiment, the resolution and frame rate required for drowsy driving network model 314 and IPE 312 can be same.

The second preprocessing module 306b may include various sub-modules to transform the visual data stored in the shared buffer 304. In one embodiment, the sub-modules may include a face cropping module 308 that has a machine learning/neural network model to detect and crop a face of a driver from the visual data. Upon detection of the position of a head of the driver in the captured image, a bounding box may be placed around the detected head for cropping the area of the image enclosed by the bounding box. In one embodiment, the location and dimensions of the bounding box are predefined. In another embodiment, the dimensions of the bounding box are dynamic, and the dimensions are determined based on the detected position of the head in the video frame. In some embodiments, the location and dimensions of the bounding box may be predefined in the sense that they (i.e., location and dimensions) are based on detections of head positions in previous frames. In such embodiments, the location and dimensions of the bounding box may be considered dynamic in the sense that they may change over the course of a driving session even though they may be defined prior to the processing of the frames in which it is used. The cropped area from the video frame may include face and at least a portion of torso of the driver.

In another embodiment, a face cropping module 308 may receive a position of the head of the driver and the module may crop video frames based on the position. The position may include coordinates that locate the head of a driver in a video frame or image. The coordinates are determined by the head pose model of the IPE 312 for each frame in a video. The mean values of coordinates for all frames in the video are determined and stored in the memory 208 of the edge device 200. The mean values are updated based on the videos processed. In one embodiment, the sub-modules may be configured to modify the format of the video retrieved from the shared buffer 304, prior to cropping the face from the video. Further, the sub-modules may be configured to modify the format of the cropped video and change the resolution of the cropped video. For example, the format of the cropped video can be changed from YUV format to BRG format.

The visual data in the shared buffer 304 is processed by the second processing module 306b prior to pushing the visual data to a drowsy driving neural network/machine learning model 314. The second processing module 306b may include a face cropping ML model to output a cropped video that includes at least the face of a driver of the vehicle. The cropping of the video is executed by identifying a position of driver's head in each frame of the video. The area of video frame to be cropped is dynamic for each video and does not have fixed boundary. The cropped video may have lesser resolution than the original video stored in the shared buffer 304. Cropping the video content helps in reducing the size of the video frames to be sent to the model, which reduces the size of data to be processed by the neural network models. The boundary of the crop can vary based on the detection of the driver's face in each frame of the video.

In some embodiments, where the bounding box dimensions do not match the expected resolution of the video-based inference model of the driver drowsiness processing stream, the cropped video content is resized to the predefined resolution that the video-based inference model expects. Further, a mean-subtraction is performed on the resized video content and then the video content is scaled to output a preprocessed video content that is stored in another portion of the memory 208 of the edge device 200. The preprocessed video content is written to another buffer (second buffer 310) in the memory 208 of the edge device 200.

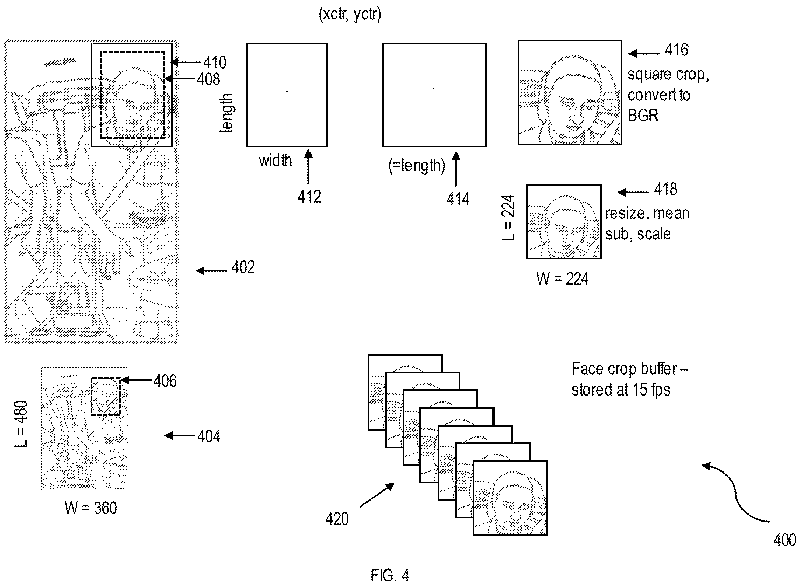

The cropped video content is stored in a second buffer 310 in the memory 208 of the device 200. The cropped video content is written into the second buffer 310 by the processor 301a of the device 200. Further, the cropped video content may be of a predefined duration. For example, the cropped video content may be of "1 sec" in length. The second buffer may hold at least three cropped videos of 1 second each. The cropped video content stored in the second buffer is fed to the drowsy driving ML model 314 to make inference related to drowsy driving, which is explained further with respect to FIG. 4.

FIG. 4 illustrates various steps of method 400 performed by the first preprocessing module 306a and the second preprocessing module 306b involved in drowsy driving detection with an example of a video frame.

FIG. 4 illustrates an embodiment for which the driver context processing stream and the driver drowsiness processing stream are each based on a single video source. The video is initially stored at a spatial and temporal resolution that is dictated by the most demanding downstream processing streams, which in this case is the driver drowsiness processing stream. The video data may be captured by the camera and initially stored in the shared buffer 304 (shown in FIG. 3) at an image resolution of 1080p, such as image 402. The first preprocessing module 306a down samples the high-definition raw video to a lower resolution video stream, which may include images, such as image 404, at 360 x 480 pixel resolution, also known as 360p. The driver drowsiness processing stream may focus on relatively closer crops of the driver's face so that relatively higher resolution imagery may be processed by the neural network.

The driver context processing stream may include a face detection module that has a machine learning/neural network model to detect (and optionally crop) a face of a driver from the visual data. The bounding box 406 is an example output of a face detection on a 360p wide field-of-view image.

The driver drowsiness processing stream may or may not include a face detection module. In the example shown, a series of previous head position detections from the driver context processing steam are used to calculate an expected position of the driver's head. This position is illustrated as a bounding box 408 within the higher resolution image 402. Because the driver's head is expected to move slightly over minutes (especially if the driver is becoming drowsy), an enlarged crop area is used. A second bounding box 410 is concentric with the expected location of the driver's head bounding box 408 but scaled to include a slightly larger crop area 410. When utilizing previous detections of the head, or a default value for the larger crop area 410, such an area may be considered predefined and moderately dynamic since the expected location will slowly track head repositioning trends. When using a crop area 406 from a separate process operating on the same reduced image, such an area may be considered predefined but highly dynamic, since the crop area may move more on a frame-to-frame basis relative to the more moderately dynamic method. The example in FIG. 4 illustrates a more moderate dynamic approach, which can be appreciated by comparing contents of bounding box 406 and bounding box 408, which are not entirely aligned. By using a moderately dynamic bounding box 408 and crop area 410 (or similarly if using a default bounding box), the downstream drowsiness processing may more readily detect that the driver's head is slumping or otherwise lower than it is typically. In this case the driver's head appears to be detected at the bottom edge of the predefined crop area 410, which may be due to the driver engaging with a smartphone.

In some embodiments, the crop area 410, which may be rectangular, 412, may be automatically reshaped to a square 414, with the square's sides having the maximum of the rectangle's length and width. Pixels from the high-resolution image 402 may then be cropped into an image crop 416. Other processing steps may also be performed on these pixels, including a conversion to a BGR color space.

The image crop 416 may then be resized into a square crop 418, having a size that matches the input dimensions of the drowsy driving neural network, which in this embodiment is a 224x224x3 pixel space (L=224, W=224, and three color channels). Additional processing may also be performed on these reduced sized images (in some scenarios the resized crop may be larger), such as mean subtraction and scaling.

The cropped and resized images 420 are then stored in an image buffer 310, which may be referred to as a face crop buffer.

### Video-based machine learning (ML) model - processing

The video-based ML model (i.e., drowsy model 314) processes the cropped video content to determine drowsy driving behavior of the driver. In one embodiment, the cropped video content is sampled to select a number of frames to be processed by the video-based ML model. The processor 301a may include a selection module that selects a set of frames from the videos stored in the second buffer 310. The second buffer 310 may store multiple video clips of fixed length based on the second buffer's size. For example, the second buffer 310 may store three video clips of length '1' second. The selected set of frames may form a video that is processed by the video-based ML model to output a drowsy confidence score.

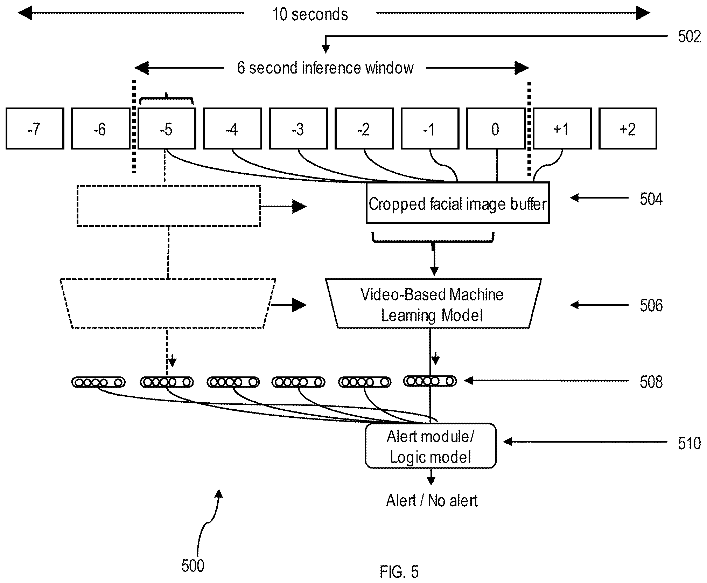

FIG. 5 illustrates the processing 500 of the video-based ML model to generate an inference, in accordance with an embodiment of the present disclosure. The video-based ML model may have an inference window 502 for generating an inference. In FIG. 5, the inference window considered is 6 seconds for exemplary purposes and should not be limited to '6'. However, the ML model can have a shorter or a longer inference window based on fleet requirements. The cropped facial image buffer 504 is the second buffer 310 (shown in FIG. 3) that is configured to store cropped facial images from the captured visual data. The newly received cropped facial images corresponding to a video from the second preprocessing module (see 306b) are depicted with index '0' in FIG. 5 and the cropped facial images corresponding to earlier image data are depicted with indices '-5, -4, -3, -2, -1'. The selection module (not shown in FIG. 5) selects a group of facial images from the cropped images of videos over the current inference window (from -5 to 0) to create a video of sampled, processed facial image crops. The video-based ML model 506 may then execute on the NNP (see 301b) to output an inference 508 based on the selected group of facial images (the video input). These steps will be repeated as time progresses. For an inference that executes one second later, the cropped facial images with index '-5' will be deleted from the cropped facial image buffer 504 and cropped facial images with previous index '-4' will correspond to the earliest cropped facial image data that contributes to the input of this next inference. In some embodiments, the new inference window may be selected when a new set of cropped facial images are received from the second preprocessing module, the new set spanning a time corresponding to the time between successive video-based inferences.

The video-based inference model may generate an inference for a video clip of predefined length, where the video clip is formed from a selected group of facial images from two or more cropped videos in an inference window. For example, the inference window may be '6' seconds and the second buffer 310 may hold '6' cropped and processed images sampled at '1' second intervals (or at higher intervals). A group of cropped images are selected over this duration, where the video-based ML model 506 outputs an inference 508 based on the selected group of cropped images.

The selected frames correspond to a modified video content based on which the video-based ML model determines a drowsy confidence score. The video-based ML model 508 may output a set of probabilities as an inference 508 for multiple sleep severity levels. Sleep severity level may correspond to labels of the training dataset utilized for training the video-based ML model. Thereafter, the drowsy confidence score may be determined from the set of probabilities by the video-based ML model, which will be later explained in the present disclosure. The drowsy confidence score is provided to the alert module 510 at which the drowsy confidence score may be compared with various thresholds to generate one or more alerts.

In order to synchronize the process of reading from and writing to the second buffer 310, a mutex lock may be implemented on the second buffer 310. With a mutex lock, the second buffer 310 cannot be accessed for reading by a selection thread when the second buffer 310 is accessed for writing by a second preprocessing module thread. The selection thread must wait until the second preprocessing module 306b completes writing. In the same way, the preprocessing module thread must wait until the selection thread completes reading. At any point of time, only one thread can access the second buffer 310 because of mutex lock. In other embodiments, the selection thread and the video-based inference model thread may run at the same time. In this alternative, errors may be avoided by configuring the second buffer 310 to be long enough so that the processing thread can write to portions of the buffer that do not overlap with the span of the buffer 310 from which the inference thread selects into inputs.

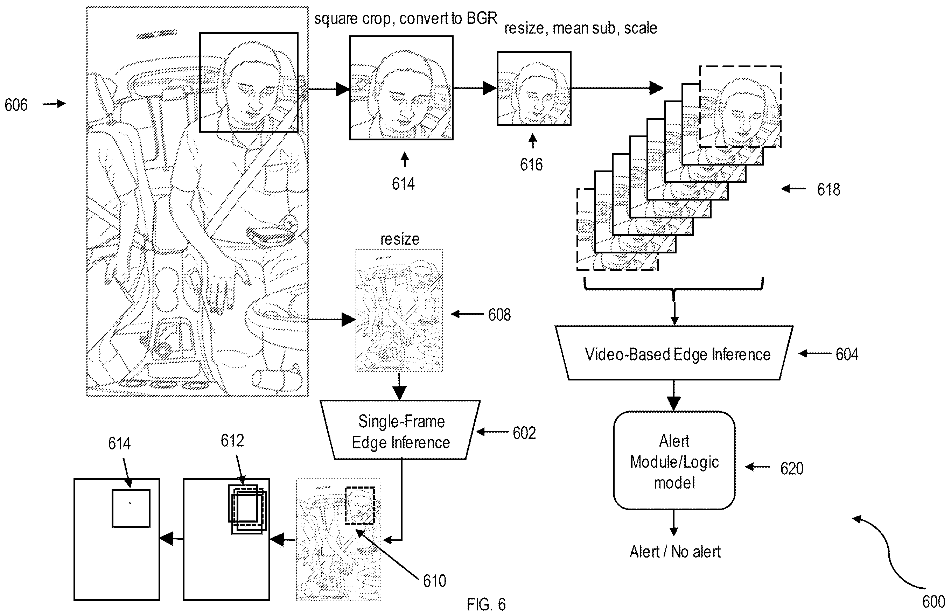

FIG. 6 illustrates a first configuration 600 of single-frame edge inference 602 and video-based edge inference 604, in which the single-frame edge inference 602 determines a position of the head of a driver. Referring to FIG. 3, first preprocessing module 306a is provided for the image processing engine (IPE) 312 and the second preprocessing module 306b is provided for video-based inference model (i.e., drowsy model 314), which may be a video-based neural network. The image 606 captured by the camera is processed by the processing modules 306a and 306b. The resized image from processing module 306a is the image 608 that is used as an input for the IPE 312 to output single-frame edge inference 602. The single-frame edge inference 602 may include a detected position (e.g., indicated by a bounding box 610) of the head in the resized image 608. The detected position of the head in prior or post images may vary based on the head movement of the driver in those images (see 612). The IPE 312 may determine a position of the head based on detected positions for a predefined duration of captured images. The position of the head from IPE 312 may be a mean or a median of the detected positions of the predefined duration of images processed. For example, the position of head can be determined based on the detected positions of images processed for the last 30 seconds. The determined position of head along with dimensions of a bounding box (see 614) may be communicated to the preprocessing module 306b for cropping a portion of image (i.e., image area that includes head of the driver) from the captured high-definition images stored in buffer 304.

In one embodiment, the second processing module 306b receives the position of the head from the IPE 312 when there is a single inward camera in the camera module 212 of FIG. 2. The cropped image 614 is then resized to obtain cropped and resized image 616. The image 616 along with other cropped and resized images 618 is stored in buffer. However, in FIG. 6, the video-based edge inference 604 is the only inference considered for alert generation by the alert module 620 and the single-frame edge inference 602 is provided to assist the second processing module 306b with the position of the head for cropping the face of the driver from the captured visual data. This configuration will reduce the dependency on field of view precision of the camera (which may make the system easier to install and/or more robust to slight movements) because the IPE 312 assists in locating the position of the head in an image captured by the camera.

### Training of the video-based neural network model

In one embodiment, the video-based neural network model (i.e., drowsy model 314) can be a convolutional neural network (CNN) model that is trained to classify a video as indicative of one or more levels of driver drowsiness. The video-based model determines whether a driver is drowsy or not in the input video. A two-level model may output a score that indicates whether the driver is drowsy or not. The model is trained using a dataset that has videos in which drivers are depicted in various states, including having their eyes closed. The videos in the training dataset are labelled by human labelers. Each video is labeled by at least two labelers and if the labels assigned by two labelers are different for the same video, then there is a disagreement between the labelers for that video. To prioritize labelling effort, each video in the training set may be assigned an uncertainty value based on labelling. For example, a video is assigned an uncertainty value of '1' if it not labelled, an uncertainty value of '0.5' if the video is labelled by a single labeler, an uncertainty value of '0.4' if the video is labelled by two labelers with different labels, and an uncertainty value of '0.25' if the video is labelled by two labelers with same label, etc. The uncertainty values are for exemplary purposes and should not be limited to the above values. In the present example, labelers may be asked to label videos that they have not yet seen according to the uncertainty values. New videos may have the highest priority, followed by videos that have been labeled once before, followed by videos that have been labeled by two labelers who disagree. The lowest priority may then be to label videos that have been labeled by two labelers who agree.

In a first video labeling and training scheme, the manual labelers assign labels to the videos in the training set, where the labels may include yawn, glasses, awake, drowsy, and other options such as driver not in frame, driver eyes aren't visible. Further, the 'awake' label may have sub-labels such as normal, blinking, and eyes look closed, etc. In addition to the 'awake' label, the 'drowsy' label may include sub-labels such as eyes closed, blinking, and eyes open, etc. The labelers have to assign one of these labels to classify the videos in the training set.

As a labeler training measure, new labelers may be asked to assign labels previously classified and verified videos. Each new labeler may assign a label to a video and the labels assigned to the videos may be compared with the previously verified classifications. Upon meeting a desired accuracy level, the labelers may be tasked with labeling new videos. In this way, a group of labelers may be formed with high overall accuracy, making it more likely that labeler disagreement actually reflects underlying uncertainty about the state of the driver in each video. With drowsy driving, labeler disagreement may be common.

In a second video labeling and training scheme, the video-based ML model is trained to output an inference, where the output includes a distribution of probabilities over a range of sleep severity levels. In order to understand the functional relation between sleep severity levels and the facial image videos, the ML model is trained with labelled facial image videos, where each facial image video in the training set is assigned with a sleep severity level by a human labeler. The training set for the ML model includes labelled facial image videos with respective sleep severity level as their label. Sleep severity levels may include: (1) Fully alert and focused on road; (2) Fully alert but looking around; (3) Fully awake, but distracted; (4) Relaxed and/or bored; (5) Heavy eyes and/or fluttering; (6) Fighting sleep; (7) Eyes halfway closed; (8) Eyes fully closed for 3 seconds or longer. In some embodiments, labelers may be asked to select one of these with sleep severity states for a given video. The labeler may also have the option of selecting one or more background classes. For example, a background class may be selected if the driver in the video is wearing sunglasses/glasses; the eyes are not visible; the driver is not present; or the image is too blurry. A model trained on these labels may be able to produce outputs such that outputs 1 through 8 correspond to increasing sleep severity.

### Video-based machine learning (ML) model - configurability

Using the sleep severity labeling scheme, the video-based inference model is trained to output a probability for each of multiple sleep severity levels, where the summation of probabilities of all the sleep severity levels (and the background classes, if any) should be equal to 'one'. For example, the multiple sleep severity levels can be eight such as '1-8', where each level has respective driver characteristics, as explained above. The level '1' may indicate that driver is fully alert and focused on the road, the level '5' may indicate that driver has heavy eyes, and the level '8' may indicate that the driver has closed eyes for '3' seconds or longer. However, probabilities of all the sleep severity levels may not interest a fleet manager who is managing the fleet of drivers and receiving drowsy alerts from devices installed in vehicles of the fleet. Too many alert notifications for relatively safe conditions may decrease the effect of alert notifications for relatively unsafe conditions. To retain the effectiveness of the alerts on the remote manager (or even for the driver), the model can be configured such that probabilities of some of the sleep severity levels are not forwarded to the alert module 316 for alert generation. Likewise, the alert module 316 may be configured to ignore some of the outputs. These configurations may decrease the frequency of alerts being generated, thereby highlighting the alerts that are still generated. For example, the fleet manager may only be interested in knowing probabilities of sleep severity levels ranging from '4 to 8', thereby the enabling the video-based inference model to send the probabilities of sleep severity levels '4 to 8' to the alert module 316. A different fleet manager may configure the system to ignore sleep severity level '4' so that only drowsy driving events of '5' or above trigger a notification to the fleet manager.

The sleep severity levels, when output by the video-based inference model based on imagery of a driver, are the indicators of the state of drowsiness of the driver. The video-based inference model is trained using labelled video clips, each labelled with one sleep severity level. For example, the training data for the video-based inference model may include a video tagged with level '8' by a labeler. The video-based inference model may output an inference based on the input video processed by the model. The inference may include probabilities for at least one sleep severity level. The output sent from the video-based inference model to the alert module may be configured as per the requirements of the fleet manager. Alternatively, or in addition, the outputs of the video-based inference model may trigger alerts differently based on configurations of the alert model. In one embodiment, the ML model may send the probabilities of one or more sleep severity levels. For example, the ML model may send the probability of level '8' to the alert module 316 for alert generation. In another embodiment, the ML model is configured to send a summation of the probabilities of plurality of sleep severity levels. For example, the ML model may send a summation of the probabilities of levels '6 to 8' to the alert module for the alert generation. In yet another embodiment, the ML model may send a number of occurrences of a certain sleep severity level over a time period to the alert module 316, such that an alert is generated based on a frequency of a sleep severity level in a sequence of inferences for that driver.

### Alert module - Combining video-based model inferences with IPE inferences

The alert module 316 may include a logic model that receives drowsy driving inferences from the video-based ML model. The inference from the ML model may include a distribution of probabilities over a range of sleep severity levels. Further, the alert module 316 receives phone usage score, pose classifier score, eye closure, and yawn score from the IPE 312. The alert module 316 compares the probabilities of desired sleep severity levels with a set of thresholds and determines whether an alert should be generated based on the comparison(s).

In one embodiment, the alert module 316 generates an alert if the probability of highest sleep severity level is not equal to zero or above a threshold. For example, the alert module 316 will generate an alert if sleep severity level '8' has a probability of 0.1 and if the threshold is set below 0.1. In another embodiment, the alert module 316 may generate alert based on comparison of one or more parameters from the video-based ML model with their respective thresholds. The one or more parameters include:
- probability of a single sleep severity level,
- cumulative probability of a plurality of sleep severity levels, and
- frequency of occurrence of any probability for one or more sleep severity levels.

In addition to comparison of the drowsy confidence score, the alert module 316 determines if the phone usage score is greater than a phone usage threshold. If the phone usage score is greater than the phone usage threshold, then the generated alert is a phone usage alert that indicates the driver is driving the vehicle and using the phone. Similarly, the alert module 316 may determine whether the eye closure score is greater than an eye closure threshold if an eye closure score is available. The generated alert is a severe drowsy alert if the eye closure score is greater than the eye closure threshold and the drowsy confidence score is greater than the first predefined threshold. In one embodiment, the generated alert is a severe alert if the drowsy confidence score is greater than a second predefined threshold. Further, the alert module 316 compares yawn score (if available) with a yawn threshold. The alert module 316 generates a severe alert if the yawn score is greater than the yawn threshold and the drowsy confidence score is greater than the first predefined threshold.

In some embodiments, the alert module 316 compares the head pose classifier score with a pose threshold. If the head pose classifier score is greater than a pose threshold, indicating that the driver's face is not completely visible in the captured video, then the corresponding video-based inference may be considered invalid. This may be a way to lessen false detection of drowsy driving by using a driver context processing stream.

A generated alert is transmitted to driver's device 108 and/or fleet operator device 110 via a communication module 204 of the edge device 200. The alert is not sent if the speed of the vehicle is less than a speed threshold. For example, the driver is not alerted if the vehicle is halted.

In some embodiments, the alert is not transmitted to the driver's device if the time elapsed from the previous drowsy alert is not greater than a predefined time duration. This may mitigate distracting effects of false alarms on the driver. However, the alert may be sent to the fleet operator device 110 for storing the number of alerts raised with respect to a particular driver. Alternatively, the drowsy inferences may be logged and reviewed by neutral auditors to determine whether the events correspond to true positives or false alarms and may be added to training data for subsequent iterations of the video-based inference model.

In one example, if the driver is looking down to operate his smartphone, then his eyes may look closed to the video-based drowsy model, but the phone usage ML model may identify that the driver was accessing his phone at that instance. The alert module 316 will identify that the inference of the video-based ML model is indeed a false alarm, and a phone usage alert has to be raised because phone usage has led to a false detection of drowsiness by the video-based ML model. Referring to FIG. 5, consecutive inferences from the video-based ML model can be received by the alert module/logic model and the alert module may or may not generate an alert based on the recent inference(s).

### Second arrangement for drowsy driving detection

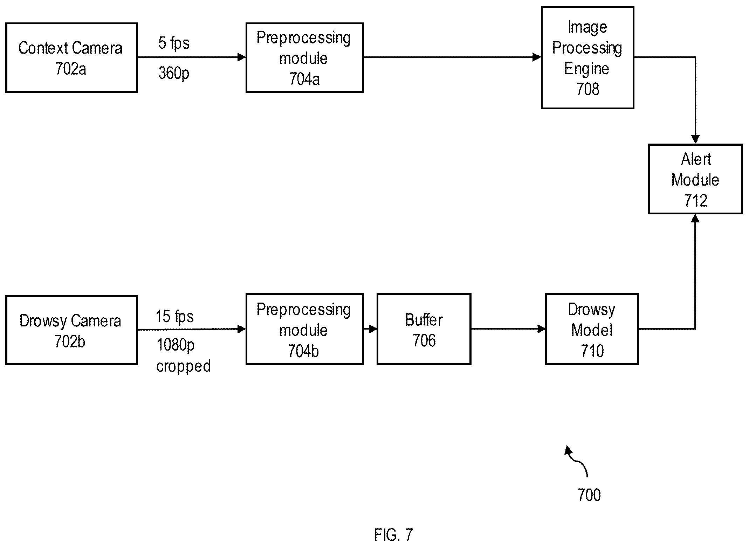

FIG. 7 illustrates a second arrangement 700 that is alternative to the configuration shown in FIG. 3. In FIG. 7, there are two separate inward cameras instead of a single inward camera in FIG. 3. The two separate cameras are context camera 702a and drowsy camera 702b, where the drowsy camera 702b is installed to focus on the face of the driver, and the context camera 702a captures the entire cabin of the vehicle. The visual data captured by the context camera 702a is provided to the first preprocessing module 704a (similar to module 306a) for further processing. The first preprocessing module 704a is configured to modify the visual data captured by the context camera into a desired format that is required by the image processing engine (IPE) 708 (similar to IPE 312).

The drowsy camera 702b is configured to capture facial images of the driver. In order to the capture the facial image, the drowsy camera 702b is placed on the dashboard of the vehicle near to the driver's seat or any other place in the vehicle cabin from which the driver's face is clearly visible. The drowsy camera 702b may have additional features than the context camera 702a, and the drowsy camera 702b may capture the status of driver's eyes even if the driver is wearing spectacles or sunglasses. The video feed from the drowsy camera 702b is provided to the second preprocessing module 704b for further processing. The second preprocessing module 704b modifies the video feed from the drowsy camera 702b to a desired format required by the video-based ML model. The processing steps performed by the second preprocessing module 702b are already explained with reference to FIG. 3.

In one embodiment, the drowsy camera 702b may crop the captured image to include the face of the driver and send the cropped image to the second preprocessing module 704b. This may reduce the bandwidth required for the connection between the camera module and the processors. However, inclusion of a cropping module in the camera module may increase the complexity of the camera module and/or increase the camera's size.

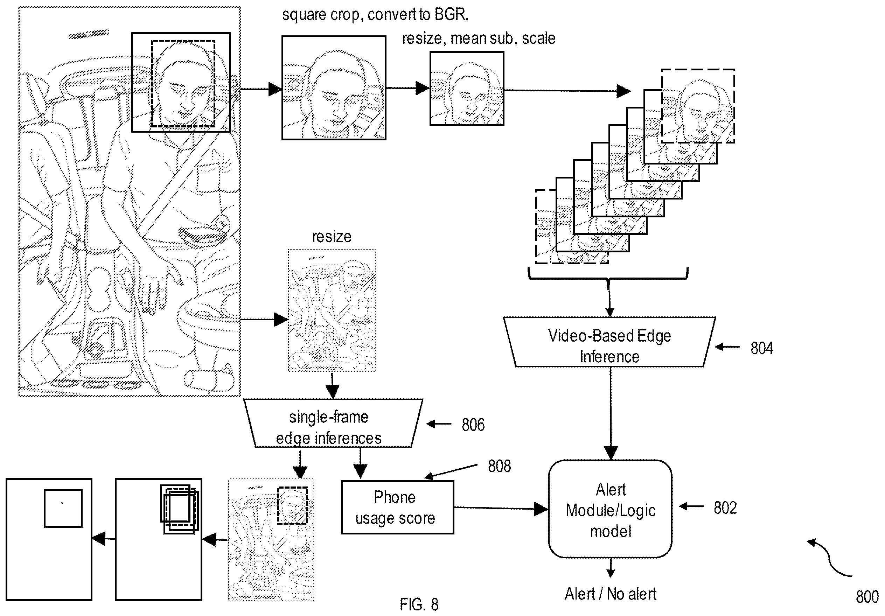

FIG. 8 illustrates a second configuration 800 of single-frame edge inference and video-based edge inference, in which the alert module 802 modulates the video-based edge inference with the single-frame edge inference for alert generation. The single-frame edge inferences include inferences from multiple frame-based ML models (e.g., phone usage ML model). The alert module 802 receives video-based edge inference including probability distribution for various sleep severity levels and the single-frame edge inference including scores from multiple ML models or a multi-headed NN model. The alert module 802 verifies the video-based edge inference 804 based on the scores in the single-frame edge inference 806. To that effect, the alert module 802 checks whether the eye closure of the driver is due to drowsiness or due to smart phone usage while driving based on the phone usage score 808 determined by phone usage ML model in the IPE. One or more other checks based on single-frame inferences may be included, as described above. The single-frame edge inference 806 enables the alert module/logic model 802 to identify false alarms in the video-based edge inference 804 and to generate appropriate alerts based on the driving behavior (e.g., drowsy or distracted). In addition to filtering the false alarms, the single-frame edge inferences 806 may provide additional insights to classify the video-based edge inference 804. For example, eye closure score and yawn score in the single-frame edge inference 806 may enable the alert module 802 to accurately identify drowsiness of the driver if drowsiness is not evident from the video-based edge inference 804.

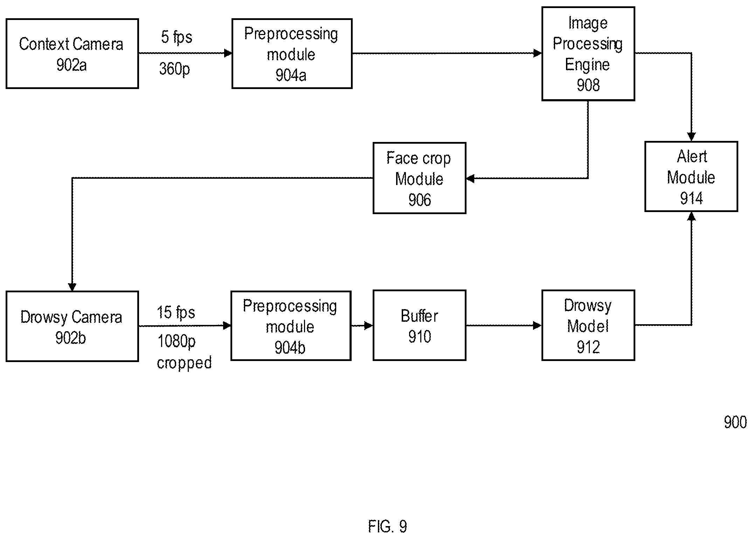

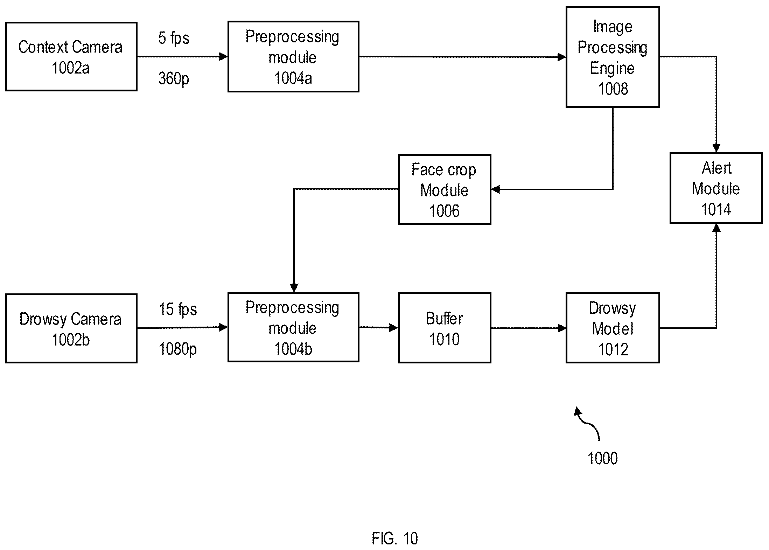

FIG. 9 illustrates a third arrangement 900 of devices for drowsy driving detection which is similar to FIG. 7, but as depicted in FIG. 9, the drowsy camera 902b receives a position of the head from the IPE 908 and the drowsy camera 902b crops the captured video frames based on the position of the head received. FIG. 10 illustrates a fourth arrangement 1000 of devices similar to that of FIG. 9, the difference is that the drowsy camera 1002b does not crop the captured image at its end instead the cropping of the image is performed at the second preprocessing module 1004b. Further, the second preprocessing module 1004b crops images received from drowsy camera 1002b based on the position of the head received from the IPE 1008.

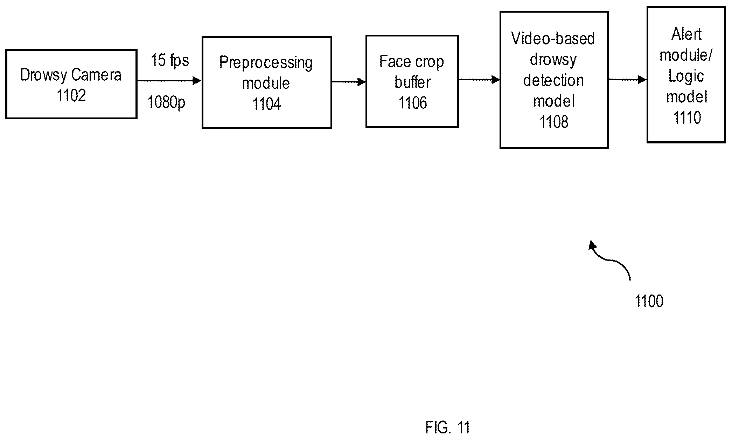

FIG. 11 illustrates a fifth arrangement 1100 of devices for drowsy driving detection. FIG. 11 does not include a context camera, therefore, the detection of drowsy driving is entirely dependent on the accuracy of the video-based drowsy detection model 1108. The drowsy camera 1102 captures the images that include the head and that may include at least some portion of torso of the driver. The preprocessing module 1104 processes the captured images to output images that are in predefined format required by video-based drowsy detection model 1108. One or more image processing steps (such as crop, resize, mean sub, scale, etc.) may be performed by the preprocessing module 1104 to produce the output images. The processed images are stored in face crop buffer 1106 to be accessed by the video-based drowsy detection model 1108. The alert module 1110 may generate an alert based on the inference provided by the video-based drowsy detection model 1108. The implementation will reduce the number of devices required for drowsy driving detection from the earlier implementations, thereby reducing the complexity of the logic model.

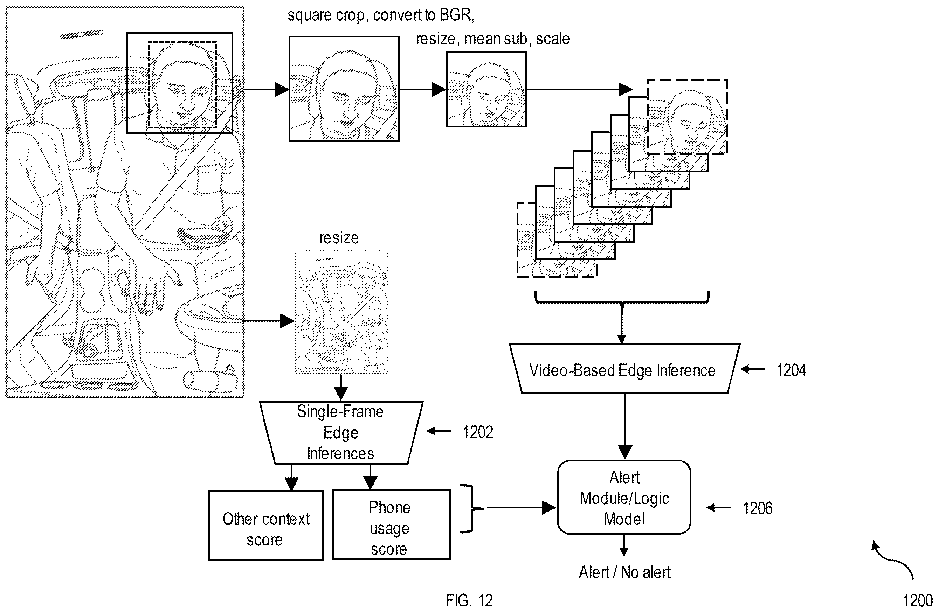

FIG. 12 illustrates a third configuration 1200 of single-frame edge inference 1202 and video-based edge inference 1204, which is similar to FIG. 8. However, in FIG. 12, the single-frame edge inference 1202 does include determination of a position of the head of the driver in the captured images. The single-frame edge inference 1202 provided to the alert module/logic module 1206 enables the alert module 1206 to filter false inferences from the video-based edge inference 1204 based on the scores in the single-frame edge inferences 1202 from the ML models in IPE (see 312).

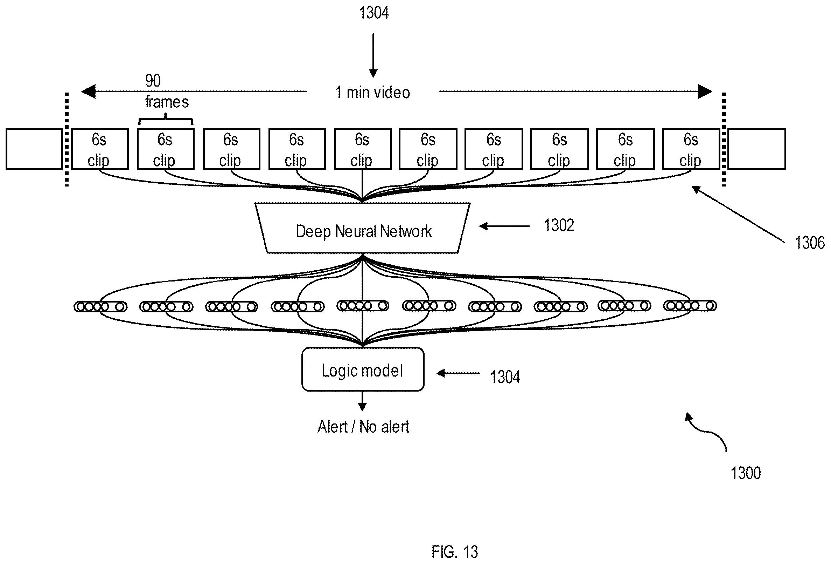

FIG. 13 illustrates a training procedure 1300 of the video-based ML model (in this case deep neural network 1302), in accordance with an embodiment of the present disclosure. FIG .13 depicts an example video of duration 1 minute that is divided into multiple video clips 1306 of duration '6' seconds. Each second of video includes 15 frames making 90 frames for a '6' second video clip. Each video clip is labelled with a sleep severity level by a manual labeler. All the labeled video clips are used to train a neural network model 1302 (video-based ML model) to output a distribution of probabilities for the sleep severity levels. The logic model 1304 is configured to generate alert based on one or more parameters of the video-based edge inferences from the deep neural network 1302. The hyper parameters of the deep neural network 1302 may be modified if there is a difference between the input label and the output from the deep neural network. The parameters are modified such that the difference is minimized, thereby improving the accuracy of the deep neural network 1302.

### Seat Haptic

The seat haptic is a seat cover to a driver seat in the vehicle which has a haptic device installed to produce vibrations upon receiving instructions from an external device. The haptic device may include a receiver to receive alerts from the edge device. Upon reception of the alerts, the haptic device may generate vibrations to wake the driver. Further, the seat haptic may further include an audio speaker to generate alarming sounds to wake the driver upon receiving alerts from the edge device. In one example, the edge device may detect that the driver is drowsy and generate an alert. The generated alert may be transmitted to the seat haptic to produce vibrations and sounds to wake/alert the driver.

### Attentive Driving Streak

In one embodiment, positive driving behavior may be tracked for a driver. The positive driving behavior may include a driving behavior that does not raise any alerts. The driving behavior of a driver is monitored for every driving session of the vehicle by the driver. In order to track positive driving behavior, each driving session of a driver is monitored to check whether any alerts are raised for the driver, and a clean sheet indicator is added to the driver's profile if there are no alerts raised in the driving session. In one embodiment, the clean sheet indicator can be a bar that is added to the driver's profile for every alert-less driving session. The driving session or a drive duration for which the driving behavior is monitored can be predefined by the fleet manager. In one example, the driving session can be of 10 hours of drive time. Further, a star streak may be added to the driver's profile if the driver has completed consecutive driving sessions without any alerts. For example, if the driver has achieved four bars, then a star streak is added to the driver's profile. In addition to incentivizing positive driving behavior, negative driving behavior may be penalized. If one or more alerts are raised for a driving session, then the bars that are achieved by the driver will be deducted based on the number of alerts raised in the driving session.

## Claims

1. A computer-implemented method for drowsy driving detection, the method comprising:
receiving, by at least one processor of a computing device in a vehicle, a video frame from a camera in the vehicle,
detecting a position of a head of the driver of the vehicle in the video frame and defining a bounding box around the detected head position;
receiving, by the at least one processor , at least one image at a first resolution from a camera in the vehicle;
processing, by the at least one processor, each of the at least one images to output facial image(s) corresponding to each of the at least one images, each facial image being a portion of a field of view of the camera corresponding to the bounding box;
storing, by the at least one processor, the at least one facial image in a first buffer of a memory of the device;
selecting, by the at least one processor, a group of the at least one facial images from the first buffer, wherein the group of facial images constitute a video of sequential facial images;
determining, by the at least one processor, a drowsy confidence score based on the video; and
generating, by the at least one processor, an alert if the drowsy confidence score is greater than a first threshold, wherein determining the drowsy confidence score comprises:
processing the video, by a video-based neural network model in the at least one processor, to determine the drowsy confidence score.

2. The method of claim 1, further comprising:
storing, by the at least one processor, a second facial image in the first buffer, wherein the second facial image overwrites an earlier image that is not selected to form the video.

3. The method of claim 1, wherein the video-based neural network model is trained based on labels associated with videos of sequential facial images.

4. The method of claim 1, further comprising:
resizing, by the at least one processor, the at least one image to a second resolution, wherein the second resolution is lower than the first resolution.

5. The method of claim 4, further comprising one or more of:
determining, by the at least one processor, an eye closure score of the driver of the vehicle based on the resized at least one image, wherein the generated alert indicates that the driver is drowsy, and wherein the generated alert is a severe alert if the eye closure score is greater than an eye closure threshold;
determining, by the at least one processor, a phone usage score of a driver based on the resized at least one image, wherein the generated alert indicates a phone usage alert if the phone usage score is greater than a phone usage threshold;
determining, by the at least one processor, a head pose score of a driver of the vehicle based on the resized at least one image, wherein the generated alert is not sent to the driver if the head pose score is greater than a head pose threshold; and
determining, by the at least one processor, a yawn score for a driver of the vehicle based on the resized at least one image, wherein the generated alert is a moderate alert if the yawn score is greater than a yawn threshold.

6. The method of claim 1, wherein processing the at least one image to output the facial image(s) comprises:
converting format of the at least one image from a first format to a second format, wherein the first format is YUV and the second format is BGR;
cropping an image area enclosed by the bounding box; and
resizing the cropped image area to output the at least one facial image with a third resolution.

7. The method of claim 6, wherein video-based neural network model is trained on labels assigned to cropped video clips, the cropped video clips comprising cropped video frames including at least heads of drivers.

8. The method of claim 1, further comprising:
sending, by the at least one processor via a communication interface, the severe alert to a driver device if the time elapsed from a previous alert sent to the driver device is greater than a first time threshold, wherein the first time threshold is defined by a fleet manager.

9. A device comprising a processor configured to perform the steps of the method of any of claims 1 to 8.

## Patentansprüche

1. Computergestütztes Verfahren zur Erkennung von Schläfrigkeit am Steuer, wobei das Verfahren Folgendes umfasst:
Empfangen, durch mindestens einen Prozessor einer Rechenvorrichtung in einem Fahrzeug, eines Videoeinzelbildes von einer Kamera im Fahrzeug,
Erkennen einer Position eines Kopfes des Fahrers des Fahrzeugs im Videoeinzelbild und Definieren eines Begrenzungsrahmens um die erkannte Kopfposition herum;
Empfangen, durch den mindestens einen Prozessor, mindestens eines Bildes mit einer ersten Auflösung von einer Kamera im Fahrzeug;
Verarbeiten, durch den mindestens einen Prozessor, jedes der mindestens einen Bilder, um ein Gesichtsbild/Gesichtsbilder auszugeben, die jedem der mindestens einen Bilder entsprechen, wobei jedes Gesichtsbild ein Abschnitt eines Sichtfelds der Kamera ist, das dem Begrenzungsrahmen entspricht;
Speichern, durch den mindestens einen Prozessor, des mindestens einen Gesichtsbildes in einem ersten Puffer eines Speichers der Vorrichtung;
Auswählen, durch den mindestens einen Prozessor, einer Gruppe der mindestens einen Gesichtsbilder aus dem ersten Puffer,
wobei die Gruppe von Gesichtsbildern ein Video aus aufeinanderfolgenden Gesichtsbildern bildet;
Bestimmen, durch den mindestens einen Prozessor, eines Konfidenzwerts für Schläfrigkeit basierend auf dem Video; und
Erzeugen, durch den mindestens einen Prozessor, einer Warnung, wenn der Konfidenzwert für Schläfrigkeit größer als ein erster Schwellenwert ist, wobei das Bestimmen des Konfidenzwerts für Schläfrigkeit Folgendes umfasst:
Verarbeiten des Videos durch ein videobasiertes neuronales Netzwerkmodell in dem mindestens einen Prozessor, um den Konfidenzwert für Schläfrigkeit zu bestimmen.

2. Verfahren nach Anspruch 1, weiter umfassend:
Speichern, durch den mindestens einen Prozessor, eines zweiten Gesichtsbildes in dem ersten Puffer, wobei das zweite Gesichtsbild ein früheres Bild überschreibt, das nicht zur Bildung des Videos ausgewählt wurde.

3. Verfahren nach Anspruch 1, wobei das videobasierte neuronale Netzwerkmodell auf der Basis von Markierungen trainiert wird, die mit Videos von aufeinanderfolgenden Gesichtsbildern assoziiert sind.

4. Verfahren nach Anspruch 1, weiter umfassend:
Anpassen der Größe, durch den mindestens einen Prozessor, des mindestens einen Bildes auf eine zweite Auflösung, wobei die zweite Auflösung niedriger ist als die erste Auflösung.

5. Verfahren nach Anspruch 4, weiter umfassend eines oder mehr von:
Bestimmen, durch den mindestens einen Prozessor, eines Augenschließungsgrades des Fahrers des Fahrzeugs basierend auf dem in der Größe angepassten mindestens einen Bild, wobei die erzeugte Warnung angibt, dass der Fahrer schläfrig ist, und wobei die erzeugte Warnung eine kritische Warnung ist, wenn der Augenschließungsgrad größer als ein Augenschließungs-Schwellenwert ist;
Bestimmen, durch den mindestens einen Prozessor, eines Telefonbenutzungsgrades eines Fahrers basierend auf dem in der Größe angepassten mindestens einen Bild, wobei die erzeugte Warnung eine Telefonbenutzungswarnung angibt, wenn der Telefonbenutzungsgrad größer als ein Telefonbenutzungs-Schwellenwert ist;
Bestimmen, durch den mindestens einen Prozessor, eines Kopfhaltungsgrades eines Fahrers des Fahrzeugs basierend auf dem in der Größe angepassten mindestens einen Bild, wobei die erzeugte Warnung nicht an den Fahrer gesendet wird, wenn der Kopfhaltungsgrad größer als ein Kopfhaltungs-Schwellenwert ist; und
Bestimmen, durch den mindestens einen Prozessor, eines Gähngrades für einen Fahrer des Fahrzeugs basierend auf dem in der Größe angepassten mindestens einen Bild, wobei die erzeugte Warnung eine unkritische Warnung ist, wenn der Gähngrad größer als ein Gähn-Schwellenwert ist.

6. Verfahren nach Anspruch 1, wobei das Verarbeiten des mindestens einen Bildes zur Ausgabe des Gesichtsbildes/der Gesichtsbilder Folgendes umfasst:
Konvertieren des Formats des mindestens einen Bildes von einem ersten Format in ein zweites Format, wobei das erste Format YUV ist und das zweite Format BGR ist;
Ausschneiden eines Bildbereichs, der von dem Begrenzungsrahmen umschlossen ist; und
Anpassen der Größe des zugeschnittenen Bildbereichs, um das mindestens eine Gesichtsbild mit einer dritten Auflösung auszugeben.

7. Verfahren nach Anspruch 6, wobei das videobasierte neuronale Netzwerkmodell anhand von Markierungen trainiert wird, die den zugeschnittenen Videoclips zugewiesen sind, wobei die zugeschnittenen Videoclips zugeschnittene Videoeinzelbilder umfassen, die mindestens die Köpfe der Fahrer enthalten.

8. Verfahren nach Anspruch 1, weiter umfassend:
Senden, durch den mindestens einen Prozessor, der kritischen Warnung über eine Kommunikationsschnittstelle an eine Fahrervorrichtung, wenn die seit einer vorherigen an die Fahrervorrichtung gesendeten Warnung verstrichene Zeit größer als ein erster Zeitschwellenwert ist, wobei der erste Zeitschwellenwert von einem Flottenmanager definiert wird.

9. Vorrichtung, die einen Prozessor umfasst, der so konfiguriert ist, dass er die Schritte des Verfahrens nach einem der Ansprüche 1 bis 8 durchführt.

## Revendications

1. Procédé mis en œuvre par ordinateur destiné à une détection de somnolence au volant, le procédé comprenant :
la réception, par au moins un processeur d'un dispositif informatique dans un véhicule, d'une trame vidéo en provenance d'une caméra dans le véhicule,
la détection d'une position d'une tête du conducteur du véhicule dans la trame vidéo et la définition d'un cadre de sélection autour de la position de tête détectée ;
la réception, par l'au moins un processeur, d'au moins une image à une première résolution en provenance d'une caméra dans le véhicule ;
le traitement, par l'au moins un processeur, de chacune de l'au moins une image pour produire une ou plusieurs images faciales correspondant à chacune de l'au moins une image, chaque image faciale étant une partie d'un champ de vision de la caméra correspondant au cadre de sélection ;
le stockage, par l'au moins un processeur, de l'au moins une image faciale dans une première mémoire tampon d'une mémoire du dispositif ;
la sélection, par l'au moins un processeur, d'un groupe de l'au moins une image faciale en provenance de la première mémoire tampon,
dans lequel le groupe d'images faciales consituent une vidéo d'images faciales séquentielles ;
la détermination, par l'au moins un processeur, d'un score de confiance de somnolence sur la base de la vidéo ; et
la génération, par l'au moins un processeur, d'une alerte si le score de confiance de somnolence est supérieur à un premier seuil, dans lequel la détermination du score de confiance de somnolence comprend :
le traitement de la vidéo, par un modèle de réseau neuronal basé sur la vidéo dans l'au moins un processeur, pour déterminer le score de confiance de somnolence.

2. Procédé selon la revendication 1, comprenant en outre :
le stockage, par l'au moins un processeur, d'une seconde image faciale dans la première mémoire tampon, dans lequel la seconde image faciale écrase une image précédente qui n'est pas sélectionnée pour former la vidéo.

3. Procédé selon la revendication 1, dans lequel le modèle de réseau neuronal basé sur la vidéo est entraîné sur la base d'étiquettes associées à des vidéos d'images faciales séquentielles.

4. Procédé selon la revendication 1, comprenant en outre :
le redimensionnement, par l'au moins un processeur, de l'au moins une image à une deuxième résolution, dans lequel la deuxième résolution est inférieure à la première résolution.

5. Procédé selon la revendication 4, comprenant en outre une ou plusieurs parmi :
la détermination, par l'au moins un processeur, d'un score de fermeture des yeux du conducteur du véhicule sur la base de l'au moins une image redimensionnée, dans lequel l'alerte générée indique que le conducteur est somnolent et dans lequel l'alerte générée est une alerte grave si le score de fermeture des yeux est supérieur à un seuil de fermeture des yeux ;
la détermination, par l'au moins un processeur, d'un score d'utilisation du téléphone d'un conducteur sur la base de l'au moins une image redimensionnée, dans lequel l'alerte générée indique une alerte d'utilisation du téléphone si le score d'utilisation du téléphone est supérieur à un seuil d'utilisation du téléphone ;
la détermination, par l'au moins un processeur, d'un score de position de la tête d'un conducteur du véhicule sur la base de l'au moins une image redimensionnée, dans lequel l'alerte générée n'est pas envoyée au conducteur si le score de position de la tête est supérieur à un seuil de position de la tête ; et
la détermination, par l'au moins un processeur, d'un score de bâillement d'un conducteur du véhicule sur la base de l'au moins une image redimensionnée, dans lequel l'alerte générée est une alerte modérée si le score de bâillement est supérieur à un seuil de bâillement.

6. Procédé selon la revendication 1, dans lequel le traitement de l'au moins une image pour produire les une ou plusieurs images faciales comprend :
la conversion d'un format de l'au moins une image d'un premier format dans un second format, dans lequel le premier format est YUV et le second format est BGR ;
le recadrage d'une zone d'image délimitée par le cadre de sélection ; et
le redimensionnement de la zone d'image recadrée pour produire l'au moins une image faciale avec une troisième résolution.

7. Procédé selon la revendication 6, dans lequel un modèle de réseau neuronal basé sur la vidéo est entraîné sur des étiquettes attribuées à des clips vidéo recadrés, les clips vidéo recadrés comprenant des trames vidéo recadrées incluant au moins des têtes de conducteurs.

8. Procédé selon la revendication 1, comprenant en outre :
l'envoi, par l'au moins un processeur par le biais d'une interface de communication, de l'alerte grave à un dispositif de conducteur si le temps écoulé depuis une alerte précédente envoyée au conducteur est supérieur à un premier seuil de temps, dans lequel le premier seuil de temps est défini par un gestionnaire de flotte.

9. Dispositif comprenant un processeur configuré pour exécuter les étapes du procédé selon l'une quelconque des revendications 1 à 8.
